# EUROPÄISCHE PATENTSCHRIFT

(11) **EP 3 365 655 B1**
(45) Veröffentlichungstag und Bekanntmachung des Hinweises auf die Patenterteilung: **04.12.2019**
(21) Anmeldenummer: 16781405.2
(22) Anmeldetag: 12.10.2016
(51) Int. Cl.: G01N 15/06, F02D 41/14, F02D 41/22, G01N 27/04

(54) **RUSSPARTIKELSENSOR**
SOOT PARTICLE SENSOR
DETECTEUR DE PARTICULES DE SUIE

(30) Priorität: 20.10.2015 DE 102015220395
(43) Veröffentlichungstag der Anmeldung: 29.08.2018
(73) Patentinhaber: Bayerische Motoren Werke Aktiengesellschaft, 80809 München (DE)
(72) Erfinder: HELD, Rudolf, 84171 Baierbach (DE); MÜLLER, Bernhard, 82266 Inning am Ammersee (DE)
(86) Internationale Anmeldenummer: PCT/EP2016/074449
(87) Internationale Veröffentlichungsnummer: WO 2017/067830

(56) Entgegenhaltungen:
- EP-A1- 2 120 044
- EP-A1- 3 187 863
- WO-A1-2006/111386

## Beschreibung

Die Erfindung bezieht sich auf einen Rußpartikelsensor nach dem Oberbegriff des Anspruchs 1 und ein Verfahren zu dessen Herstellung.

Ein derartiger Rußpartikelsensor ist aus der EP 3 187 863 A1 bekannt.

Aus der (WO 2006/111386 A1) ist ein Sensor bekannt, bei dem die Leiterbahn aus Platin gebildet ist, während der Sensor bei dem im Handel erhältlichen Sensoren dieser Bauart aus Zirconiumdioxid besteht. Sowohl Platin wie Zirconiumdioxid sind jedoch mit hohen Kosten verbunden.

Zum technischen Hintergrund der Erfindung zählt ferner die EP 2 120 044 A1.

Aufgabe der Erfindung ist es einen kostengünstigen Rußpartikelsensor bereit zu stellen, der in seiner Messgenauigkeit dem eingangs geschilderten aus Platin und Zirconiumdioxid gebildeten Sensor zumindest entspricht.

Dies wird erfindungsgemäß mit dem im Anspruch gekennzeichneten Rußpartikelsensor erreicht. In den Ansprüchen 2 bis 5 sind bevorzugte Ausgestaltungen des erfindungsgemäßen Rußpartikelsensors wiedergegeben. Der Anspruch 6 betrifft ein bevorzugtes Verfahren zur Herstellung des erfindungsgemäßen Rußpartikelsensors, welches durch die Ansprüche 7 und 8 in vorteilhafter Weise ausgebildet wird.

Der erfindungsgemäße Rußpartikelsensor weist wenigstens eine Leiterbahn mit parallelen im Abstand angeordneten Abschnitten auf, die auf einem keramischen Träger angeordnet ist, und deren Enden mit einer Elektronik zur Bestimmung des elektrischen Widerstandes der Leiterbahn verbunden sind. Da der Widerstand der Leiterbahn durch Rußpartikel, die benachbarte Leiterbahnabschnitte überbrücken, abnimmt, ist der Sensor zur Rußmessung in Abgasen, insbesondere in den Abgasen von Verbrennungsmotoren, vor allem Dieselmotoren geeignet.

Die parallel verlaufenden Abschnitte der wenigstens einen Leiterbahn sind dazu in einem Abstand voneinander angeordnet, der der Größe der zu erfassenden Rußpartikel entspricht.

Vorzugsweise ist die Leiterbahn mäanderförmig oder schlangenförmig. Der Träger ist vorzugsweise plattenförmig ausgebildet.

Der erfindungsgemäße Sensor kann dabei im Abgaskanal des Verbrennungsmotors vorzugsweise stromabwärts des Rußpartikelfilters angeordnet sein, wobei die mit der Leiterbahn versehene Fläche des plattenförmigen Trägers vorzugsweise senkrecht und vollflächig von dem Abgas angeströmt wird.

Der keramische Träger des erfindungsgemäßen Rußpartikelsensors besteht im wesentlichen, das heißt vorzugsweise zu mindestens 80 Gew.-% aus einem Aluminiumsilikat Als Aluminiumsilikat wird vorzugsweise ein Inselsilikat verwendet, also ein Silikat, dessen Silikationen aus isolierten SiO₄-Tetraedern bestehen, also SiO₄-Tetraedern, die nicht durch Si-O-Si-Bindungen miteinander verbunden sind.

Als Aluminium-Inselsilikat wird insbesondere Mullit verwendet und/oder Silimanit, das Mullit chemisch und in allen Eigenschaften weitgehend entspricht.

Mullit weist im wesentlichen den gleichen E-Modul und Widerstand bei 600°C sowie die gleiche maximale Einsatztemperatur von 1.650°K wie Zirconiumdioxid auf, das in den handelsüblichen Rußpartikelsensoren als Trägermaterial eingesetzt wird. Dabei kann Mullit als Trägermaterial mit Verstärkungsfasern, insbesondere Mullitfasern versetzt oder mit Zirconiumdioxid dotiert werden, um einen Träger mit hervorragenden mechanischen Eigenschaften, insbesondere hoher Biegefestigkeit zu bilden.

Die Leiterbahn des erfindungsgemäßen Rußpartikelsensors besteht im wesentlichen, das heißt zumindest zu 80 Gew.-% aus einer intermetallischen Verbindung, also einer chemischen Verbindung aus mindestens zwei Metallen, wobei davon ein Metall auch ein Halbmetall, wie Silicium sein kann. Intermetallische Verbindungen sind im Unterschied zu Legierungen durch Gitterstrukturen gekennzeichnet.

Die intermetallische Verbindung ist dabei vorzugsweise Molybdändisilicid und/oder ein Aluminid, insbesondere Titanaluminid, wie Ti₃Al oder TiAl oder Eisenaluminid wie Fe₇₅Al₂₅ oder Fe₅₀Al₅₀. Neben ihrem hohen Schmelzpunkt und ihrer hohen Festigkeit zeichnen sich intermetallische Verbindungen vor allem auch durch ihren hohen Schmelzpunkt sowie ihren hohen elektrischen Leitwert [A/(Vm)] aus. So weist beispielsweise Molybdändisilicid mit 2.303°K einen höheren Schmelzpunkt als Platin und einen hohen Leitwert von 4,63 x 10⁶ A/(Vm) auf.

Aluminiumsilikate, einschließlich Mullit, sind mit geringen Kosten verbunden. MoSi₂ kann z.B. durch Umsetzung von Molybdän und Silicium bei hoher Temperatur hergestellt werden. Auch sind intermetallische Verbindungen kostengünstig herstellbar, insbesondere Eisenaluminid.

Der keramische Träger des erfindungsgemäßen Rußpartikelsensors wird vorzugsweise durch Folienguss und Sintern gebildet. Dabei wird das Siliciumsilikat, also beispielswiese Mullit, als Pulver mit einer Teilchengröße von maximal 20 µm, vorzugsweise maximal 5 µm eingesetzt.

Das Pulver wird mit einem handelsüblichen Plastifizierungsmittel für Folienguss, beispielsweise einer Carbonsäureester-Zubereitung, einem Binder für den Folienguss, wie Polyvinylbutyral, und/oder einem Dispergiermittel, wie Alkylphosphat vermischt, worauf aus der gießfähigen Masse mit einer Foliengussanlage mit einem Rakel eine Folie gebildet wird, die einer Trocknung unterworfen wird. Aus der biegsamen getrockneten Folie werden z.B. durch Ausstanzen die Träger als Grünlinge gebildet.

Die intermetallische Verbindung, also beispielsweise Molybdändisilicid wird als Pulver mit einer maximalen Teilchengröße von maximal 20 µm, insbesondere maximal 5 µm eingesetzt. Das Pulver wird in einem organischen Lösungsmittel, z.B. einem Alkohol dispergiert, um eine druckfähige Suspension zu bilden. Mit der die intermetallische Verbindung, also beispielsweise Molybdändisilicid enthaltenden Suspension wird der getrocknete, z.B aus Mullit bestehende Grünling mit einem Druckbild beispielsweise durch Siebdruck bedruckt, welches der wenigstens einen Leiterbahn entspricht, mit der der Träger versehen werden soll.

Anschließend wird der bedruckte Grünling gesintert, um den keramischen Träger aus dem Grünling mit der gesinterten Leiterbahn aus dem Druckbild zu bilden.

Die Leiterbahn, die durch Siebdruck aufgebracht wird, weist eine Breite von mindestens 30 µm, insbesondere 30 bis 300 µm auf. Falls die intermetallische Verbindung, also beispielsweise Molybdändisilicid als Paste auf den Träger aufgebracht wird, liegt die Breite der Leiterbahn bei mindestens etwa 100 µm. Der Abstand zwischen benachbarten Leiterbahnabschnitten kann ebenfalls z.B. 30 bis 300 µm betragen. Damit können auch kleine Rußpartikel bis herab zu einer Teilchengröße von z.B. 30 µm zuverlässig erfasst werden.

Die Mindestbreite der Leiterbahn stellt die Grenze der Prozessfähigkeit beim Druck bzw. Siebdruck dar. Durch sie wird also die Anzahl der Mäanderabschnitte bestimmt, die auf einen Träger vorgegebener Fläche aufgebracht werden kann.

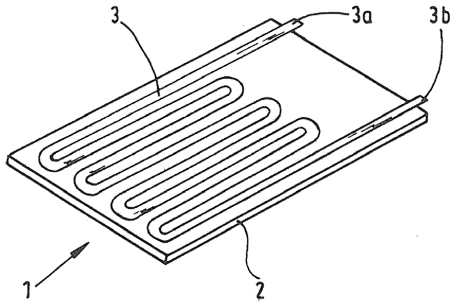

Nachstehend ist der erfindungsgemäße Rußpartikelsensor anhand der beigefügten Zeichnung beispielhaft näher erläutert, deren einzige Figur schematisch eine Ausführungsform des Rußpartikelsensors zeigt.

Danach weist der Rußpartikelsensor 1 einen plattenförmigen keramischen Träger 2 beispielsweise aus Mullit auf, der mit einer mäanderförmigen Leiterbahn 3 z.B. aus Molybdändisilicid versehen ist, deren Enden 3a und 3b mit einer nicht dargestellten Elektronik zur Bestimmung des elektrischen Widerstands der Leiterbahn 3 verbunden sind. Je mehr Rußpartikel, also elektrisch leitfähige Kohlenstoffpartikel die parallel verlaufenden Abschnitte der mäanderförmigen Leiterbahn 2 überbrücken, umso mehr wird der Widerstand der Leiterbahn 2 reduziert, wodurch die Abnahme des Widerstands ein Maß für die Rußbelegung des Sensors 1 darstellt.

In der Zeichnung ist die Leiterbahn 3 zur besseren Veranschaulichung breit dargestellt. Tatsächlich weist sie jedoch eine Breite von lediglich z.B. 30 bis 300 µm auf. Auch liegt der Abstand zwischen benachbarten Mäanderabschnitten in dieser Größenordnung.

## Patentansprüche

1. Rußpartikelsensor (1) mit einem keramischen Träger (2), auf dem wenigstens eine Leiterbahn (3) mit parallelen im Abstand angeordneten Abschnitten angeordnet ist, deren Enden (3a, 3b) mit einer Elektronik zur Bestimmung des elektrischen Widerstandes der Leiterbahn verbunden sind, **dadurch gekennzeichnet, dass** der keramische Träger (2) aus einem Aluminiumsilikat und die Leiterbahn (3) aus einer intermetallischen Verbindung gebildet wird, wobei der keramische Träger (2) keramische Verstärkungsfasern enthält und die keramischen Verstärkungsfasern durch Mullitfasern gebildet werden und das Aluminiumsilikat mit Zirconiumdioxid dotiert ist.

2. Rußpartikelsensor nach Anspruch 1, **dadurch gekennzeichnet, dass** das Aluminiumsilikat ein Inselsilikat ist.

3. Rußpartikelsensor nach Anspruch 2, **dadurch gekennzeichnet, dass** das Inselsilikat Mullit ist.

4. Rußpartikelsensor nach Anspruch 1, **dadurch gekennzeichnet, dass** die intermetallische Verbindung Molybdändisilicid und/oder ein Aluminid ist.

5. Rußpartikelsensor nach Anspruch 4, **dadurch gekennzeichnet, dass** das Aluminid Titan- und/oder Eisenaluminid ist.

6. Verfahren zur Herstellung des Rußpartikelsensors nach einem der vorstehenden Ansprüche, **dadurch gekennzeichnet, dass** der keramische Träger (2) durch Folienguss und Sintern gebildet wird.

7. Verfahren nach Anspruch 6, **dadurch gekennzeichnet, dass** die durch Folienguss gebildete Folie nach dem Gießen getrocknet, wenigstens ein getrockneter Träger als Grünling mit einer die intermetallische Verbindung in Pulverform enthaltenden Suspension mit einem der Leiterbahn (3) entsprechenden Druckbild bedruckt und die bedruckte Folie gesintert wird, um durch Sintern des Druckbildes und Sintern des Grünlings den mit der gesinterten Leiterbahn (3) versehenden keramischen Träger (2) zu bilden.

8. Verfahren nach Anspruch 7, **dadurch gekennzeichnet, dass** der getrocknete Grünling durch Siebdruck mit der die intermetallische Verbindung in Pulverform enthaltenden Suspension bedruckt wird.

## Claims

1. A soot particle sensor (1) with a ceramic support (2), on which there is arranged at least one conductor track (3) with parallel portions arranged at a distance from one another, the ends (3a, 3b) of which are connected to an electronics unit for determining the electrical resistance of the conductor track, **characterised in that** the ceramic support (2) is formed from an aluminium silicate and the conductor track (3) is formed from an intermetallic compound, wherein the ceramic support (2) contains ceramic reinforcement fibres, and the ceramic reinforcement fibres are formed by mullite fibres and the aluminium silicate is doped with zirconium dioxide.

2. A soot particle sensor according to claim 1, **characterised in that** the aluminium silicate is an island silicate.

3. A soot particle sensor according to claim 2, **characterised in that** the island silicate is mullite.

4. A soot particle sensor according to claim 1, **characterised in that** the intermetallic compound is molybdenum disilicide and/or an aluminide.

5. A soot particle sensor according to claim 4, **characterised in that** the aluminide is titanium aluminide and/or iron aluminide.

6. A method for producing a soot particle sensor according to any one of the preceding claims, **characterised in that** the ceramic support (2) is formed by film casting and sintering.

7. A method according to claim 6, **characterised in that** the film formed by film casting is dried after the casting, at least one dried support is printed as green body with a printed design corresponding to the conductor track (3) using a suspension containing the intermetallic compound in powder form, and the printed film is sintered so as to form, by sintering of the printed design and sintering of the green body, the ceramic support (2) provided with the sintered conductor track (3).

8. A method according to claim 7, **characterised in that** the dried green body is printed with the suspension containing the intermetallic compound in powder form by screen printing.

## Revendications

1. Détecteur de particules de noir de carbone (1) comportant un support céramique (2) sur lequel est installée au moins une piste conductrice (3) ayant des segments parallèles situés à distance les uns des autres et dont les extrémités (3a, 3b) sont reliées à un système électronique de détermination de la résistance électrique de cette piste conductrice,
**caractérisé en ce que**
le support céramique (2) est réalisé en un silicate d'aluminium et la piste conductrice (3) est réalisée en un composé intermétallique, le support céramique (2) renfermant des fibres de renfort céramiques, les fibres de renfort céramiques étant formées par des multifibres et le silicate d'aluminium étant dopé par du dioxyde de zirconium.

2. Détecteur de particules de noir de carbone conforme à la revendication 1,
**caractérisé en ce que**
le silicate d'aluminium est un néosilicate.

3. Détecteur de particules de noir de carbone conforme à la revendication 2,
**caractérisé en ce que**
le néosilicate est de la mullite.

4. Détecteur de particules de noir de carbone conforme à la revendication 1,
**caractérisé en ce que**
le composé intermétallique est du disilisiure de molybdène et/ou un aluminiure.

5. Détecteur de particules de noir de carbone conforme à la revendication 4,
**caractérisé en ce que**
l'aluminiure est l'aluminiure de titane et/ou de l'aluminiure de fer.

6. Procédé d'obtention d'un détecteur de particules de noir de carbone conforme à l'une des revendications précédentes,
**caractérisé en ce que**
le support céramique (2) et formé par coulage de feuilles et frittage.

7. Procédé conforme à la revendication 6,
**caractérisé en ce que**
la feuille formée par coulage de feuilles est séchée après le coulage, au moins un support séché constituant un produit vert est imprimé avec une image d'impression correspondant à la piste conductrice (3), ce avec une suspension renfermant le composé intermétallique sous forme pulvérulente, la feuille imprimée est frittée pour former par frittage de l'image d'impression et frittage du produit vert, le support céramique (2) comportant la piste conductrice frittée (3).

8. Procédé conforme à la revendication 7,
**caractérisé en ce que**
le produit vert séché est imprimé par sérigraphie avec la suspension renfermant le composé intermétallique sous forme pulvérulente.
